# EUROPEAN PATENT SPECIFICATION

(11) **EP 0 421 490 B1**
(45) Date of publication and mention of the grant of the patent: **26.04.1995**
(21) Application number: 90124161.2
(22) Date of filing: 03.10.1986
(51) Int. Cl.: C03B 3/02, C03B 5/12, C03B 5/235

(54) **Method for producing molten glass**
Verfahren zum Produzieren geschmolzenes Glases
Procédé pour la production de verre fondu

(30) Priority: 04.10.1985 US 783964; 04.10.1985 US 784188
(43) Date of publication of application: 10.04.1991
(62) Divisional of application: 86113737.0
(73) Proprietor: GAS RESEARCH INSTITUTE, Chicago Illinois 60631-3562 (US)
(72) Inventor: Stickler, David Bruce, Carlisle, Massachusetts 01741 (US); Westra, Leonard F., Reading, Massachusetts 01867 (US); Woodroffe, Jaime A., Andover, Massachusetts 01810 (US)
(74) Representative: Baillie, Iain Cameron

(56) References cited:
- AU-A- 461 310
- AU-A- 476 596
- CH-A- 270 199
- FR-A- 2 120 115

## Description

This invention relates to producing a glass by heat processing of glass and/or glass forming material and more particularly to a method for melting and making glass.

The regenerative open-hearth type glass furnace is the primary design used for glass melting in the United States and other parts of the world. Over the years, many design changes have been made, but the fundamental heat transfer mechanisms are still quite similar to those introduced by the Siemens family in the late 1800's.

Most glasses are prepared by charging raw materials into a furnace heated to about 1093°C. (2000°F.) or more to melt and react the rain materials to form a bed of molten glass. The rain materials (including previously made glass and/or cullet) are usually called "batch" and in producing glass it may, for example, comprise a source of sodium such as sodium carbonate and a source of silica such as sand, as well as other or different compounds or minerals. The "batch" is charged to the furnace and floats on previously produced molten glass until it melts and reacts to become part of the glass bed. The terms "glass batch", "glass batch material", and "batch" as used herein and in the Claims are used generically and include glass, cullet, and/or necessary or appropriate rain materials for making and/or processing all kinds of glass.

The large surface areas of open-hearth type furnaces, even with substantial insulation, lead to wall heat transfer losses that are on the order of 20 percent of the thermal input to the melter. These high wall losses together with heat losses from the stack gases and from the cooling of the molten glass itself are major factors contributing to the loin operating efficiency characteristic of current glass furnace design.

In the glass industry, it is common to quote furnace performance in terms of a heat rate which is defined as the fuel thermal input to the furnace per ton of glass melted. Thus, for example, for a furnace heat rate measured in terms of 1163 kJ/kg (10⁶ BTU/ton) of glass melted, typical heat rates for container glass are about 5.0 - 5.5, for float glass it is about 6.0, and for fiberglass it is about 7.0.

The average present day container glass furnace has a heat rate of about 2.53 times the theoretical maximum. This corresponds to a thermal efficiency, defined as the heat absorbed by the glass batch in the melting process to the thermal input to the furnace, of slightly less than 40 percent. Improvements in existing regenerative furnace designs suggest that, in the absence of emission controls, thermal efficiency on the order of a maximum of 50-55 percent may be possible. However, provisions for pollution control and efficient control of NOₓ emissions leads to a significant derating of as much as 10 percent in furnace performance in addition to a substantial increase in capital and/or operating costs for the glass furnace. The efficient utilization of energy and compliance with environment standards are therefore recognized as major problems in the operation of current fossil fuel-fired glass melting and glass making systems.

Of the present day glass melting furnaces that are not of the open-hearth design, one is a special purpose furnace that has been developed for producing reflective glass beads from cullet. This type of special purpose furnace is a vortex combustion furnace wherein a burner at the bottom of an updraft furnace produces a vorticial flow of combustion gases and entrained cullet. The particles of cullet follow a spiral path in the vortex, are heated, melted to form glass beads, cooled, and finally collected at the bottom of the furnace. For a further discussion, reference is made to U.S. Patent Number 4,475,936.

Another glass melting furnace not of the open-hearth design is described in U.S. Patent No. 4,381,934. This patent is directed to the first stage of dual stage melting or production of glass. In this first stage, a transient layer of incompletely melted glass batch material comprising a foamy opaque fluid including unmelted sand grains and the like is produced on a pedestal disposed within a heating chamber. Dry glass batch material is mechanically continuously deposited on the pedestal as by a screw feeder or the like. Heat for melting is provided by a plurality of radiant sources arranged to provide substantially uniform heat to all sides of the pedestal. As the dry glass batch material liquifies, an incompletely melted layer runs down the surface of the pedestal and falls into a pool whereafter fining and completion of the formation of the glass product occurs.

A further proposed glass melter or furnace more fully disclosed in U.S. Patent Nos. 4,544,394 and 4,553,997 is a derivative of the slagging coal combustor developed for magnetohydrodynamic (MHD) power generation applications. For a further discussion of such slagging coal combustors and cooled walls used therein see the reference set forth hereinafter. In extending this MHD combustor technology to the conceptual design of a glass melter, rather than burning coal, it is proposed that finely pulverized glass batch be heated very rapidly by injecting it into a gas-fired combustor. The high temperature batch, (which in the case of coal combustion originates as coal mineral content and forms slag which is a glassy material) under control of the fluid dynamics of a multiple burner, vortex design, is projected to the walls of a melting chamber where it thereafter flows down as a viscous layer (in the same manner as slag) and through a glass tap in the bottom of the furnace. The layer of glass on the melter walls also functions to insulate the walls in the same manner as in the aforementioned slagging coal combustors. Assuming effective downstream heat recovery, thermal efficiencies as high as 75 percent have been predicted. The melting process is accomplished by preheating the batch materials disposed in suspension within an injector/burner assembly comprising a plurality of burners located and directed to generate an upwardly directed vorticial flow, mixing and fusing the batch particles within the upwardly directed vortex generated by the burners, and depositing agglomerated glass particles and/or individual batch droplets/particles on the vortex melter top wall by fluid mechanical centrifugal forces generated by the vortex flow. The melting process in the vortex melter is accomplished by the combined effects of conductive, convective, and radiative heat transfer from the gas to particles in suspension which have a large total surface area, as opposed to conventional techniques in which the surface area of the batch exposed to heat transfer is a small portion of the theoretical bulk charge particle surface area. This type of melter operates at high combustion intensities and wall heat fluxes. However, because of the relatively small surface area of the melter, the total enthalpy losses relative to the total thermal input is small although the walls must be both cooled and non-reactive with glass. Experience with slagging magnetohydrodynamic coal combustion suggest that wall heat transfer losses may be expected to be 5 - 7 percent of the thermal input, as opposed to conventional glass melters which have wall heat transfer losses on the order of about 15-25 percent or more.

The container glass, flat glass, and fiberglass industry are the primary bulk glass producers in the United States and account for more than 90 percent of the total glass produced. It is these glass industry segments which will be most significantly impacted by increases in fuel costs and/or additional pollution control regulations, and therefore have the greatest need for improved gas-fired furnace designs.

### SUMMARY OF THE INVENTION

The invention of our EP-B-0 217 415 provides a method of and apparatus for heat processing particulate material wherein finely pulverized glass batch material is heated very rapidly by preheating and mixing glass batch material in suspension in preheated oxidizer and/or fuel flow in an injector assembly, heating the glass batch material to a high temperature in the burner assembly, directing the products of combustion and high temperature batch material suspended therein through an accelerating nozzle, to form a preferably downwardly directed preferably linear flow having a small cross-sectional area, and causing the accelerated directed flow exiting from the nozzle to impact on an impact surface, the high temperature batch material adhering to this impact surface which may form part of a central body, and then flow down its sides to a collection zone. The above invention is characterized in that the impact surface area is laterally spaced from adjacent interior spaces of the separation chamber, and the nozzle is spaced from the impact surface a distance not greater than about three times an internal dimension of the nozzle outlet, usually the diameter of a circular outlet ." In accordance with that invention, glass batch material is heated in suspension in the products of combustion to a condition at which it can form a flowing layer on the impact surface and rapidly react to form glass product.

In addition to efficient heat transfer, in accordance with a feature of the above invention, highly effective glass fining may be provided by a thin flowing melt layer having strong internal shear motion more fully discussed hereinafter. Thus, prior art fining agents, such as sulfates, are not required and this eliminates a source of SOₓ pollutant emission. The present invention also allows acoustic control of combustion stoichiometry, so that carbon addition to the batch, as would normally be required for reduced flint glass production, is not necessary.

Glass melters in accordance with the above invention have a higher degree of efficiency than that of the vortex type melter and cost substantially less to construct and operate due to its improved construction and operating features.

Another feature of furnaces constructed in accordance with the above invention is the control of pollutants. The furnace operating characteristics and its design features also result in a reduction of material carryover from the furnace by impact, volatilization and physical entrainment than that which may be expected to be present in the vortex type furnace. Thus, the amount of particulates in the exhaust gas and emission control equipment needed are reduced to a minimum. For a further discussion of pollutant control reference is made to our EP-B-0 219 018.

The above invention permits the provision of a glass melting furnace that is a very small fraction of the size of a conventional open hearth melting furnace. Such a furnace can provide improved operating efficiency over current melting systems by at least about 50 percent or more while at the same time reducing capital costs by at least about 40 percent or more. Still, further, the above invention permits achievement of all of the above noted advantages as well as control of the generation of all pollutants to a level at or below that presently deemed to be a maximum with minimum if any material carryover in the exhausting gases.

AU-A-476 596 has a plurality of burners directing combustion gases with entrained glass batch material so that said material is melted by said combustion gases and directed downwardly and outwardly against the vertical walls of a furnace containing a pool of molten glass so that the resulting molten particles are deflected into the surface of the molten bath. The preamble of claim 1 is based on this document. In accordance with the present invention there is provided a method of melting molten glass as defined in claim 1 herein."

### THE DRAWINGS

Figure 1 is a schematic side elevation view of apparatus in accordance with the invention;
Figure 2 is a fragmentary elevation end view of a nozzle having a substantially rectangular outlet and associated impact surface;
Figure 3 is a side elevation view of the nozzle and impact surface of Figure 2 taken on line 3-3;
Figure 4 is a fragmentary side elevation view with parts broken away of a further embodiment of the nozzle and impact surface wherein the nozzle and impact surface cooperate to define an annular nozzle outlet;
Figure 5 is a fragmentary side elevation end view of a still further embodiment of a nozzle similar to that of Figure 2, but wherein the nozzle has a plurality of rectangular outlets; and
Figure 6 is a bottom view of the nozzle of Figure 5 taken on line 6-6.

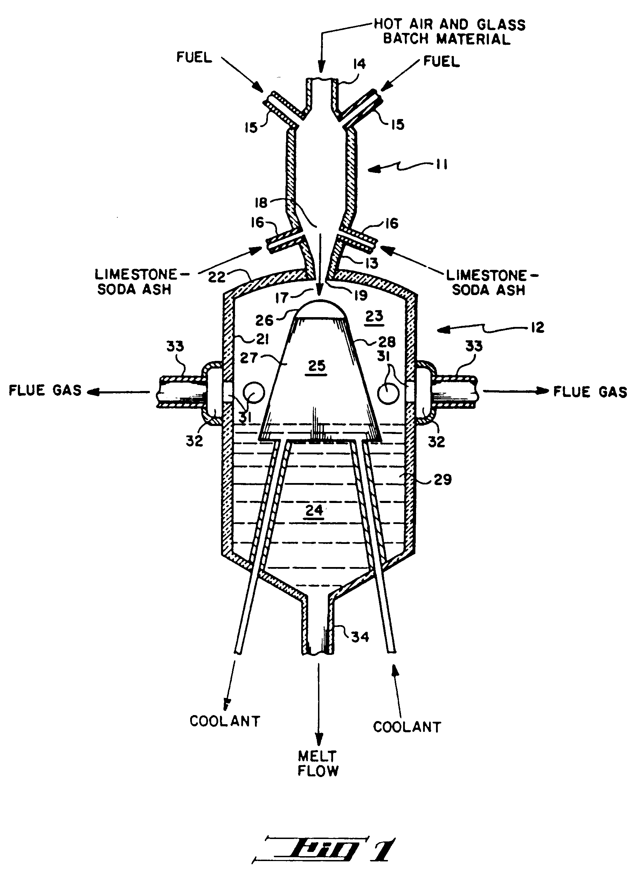

Referring now to Figure 1, this figure illustrates by way of example the process and apparatus of the present invention for heat processing glass batch material such as melting cullet and/or melting raw materials for forming glass and provide a bed of molten glass for use in a conventional manner.

Fuel, oxidizer and glass batch material are introduced into the combustion chamber as shown in Figure 1. The fuel may include petroleum fuel, but preferably is a gaseous fuel such as, for example, natural gas, and the oxidizer is preferably preheated air and/or oxygen enriched air.

The combustion chamber 11 may be of any conventional construction suitable for operation at high temperatures and processing glass batch material and is coupled to a separation chamber 12 by a nozzle 13 more fully described hereinafter.

The fuel and air are introduced, mixed and burned in conventional manner to produce products of combustion to heat glass batch material entrained therein to the necessary reaction and/or glass melting temperature as more fully described hereinafter. In the combustion chamber 11, the reaction of fuel and air provides combustion products of about 1371°C. to 2204°C. (2500° to 4000°F.) depending on the type, temperature and quantity of the fuel, oxidizer and glass batch material used and to what extent preheating is used.

Preferably, preheated glass batch material which may comprise, for example, preheated silica sand, cullet, syenite and sodium and calcium minerals are heated and homogenously dispersed in conventional manner in the oxidizer or air flow which is introduced into the combustion chamber through pipe 14. Fuel, preferably natural gas, is introduced through pipes 15, mixed with the oxidizer or air, ignited by a conventional flame holder, and burned in conventional manner in the combustion chamber 11. Satisfactory thermal equilibrium of this two phase flow may be expected to require a flow time of about 30 msec or more before injection into the combustion chamber. A suitable equilibrium particle and air temperature is in the range of about 816°C. (1500°F.) and may be introduced at a pressure of about .204 Pa (3 psig). The air may be pre-heated to a temperature to about 1204°C. (2200°F.) for a glass batch material flow rate approximately equal to the combustion gas flow rate. The glass batch material in turn may be preheated to a temperature of about 316°C. (600°F.)

Since silica, cullet and syenite and the like do not appear to have a major impact on flame stability, they are preferably introduced into the oxidizer or air flow and entrained in the products of combustion. However, since carbonates such as limestone, soda ash and the like may have an adverse effect on flame stability they should be entrained into the products of combustion downstream of the ignition point as through pipes 16. The combustion chamber size scale is controlled by throughput, volumetric heat release and particle heat transient time.

The products of combustion and entrained glass batch material are exhausted from the combustion chamber 11 through a convergent nozzle 13 that provides an exit velocity of about at least one hundred meters per second (several hundred feet per second) or more. A convergent nozzle with a convergence half angle of about ten degrees will provide an acceptable particle velocity slip. The nozzle 13 preferably provides uniform particle distribution in the products of combustion which is exhausted by the nozzle as a directed, exhaust stream 19. Glass batch material carbonate particulates such as, for example, limestone and soda ash may be homogeneously dispersed in and introduced at the nozzle flow region 18 to minimize the time during which they are exposed to high temperatures before inclusion in the melt layer. The products of combustion should provide a heat rate of about 3384 kJ/kg (2.91 x 10⁶ Btu/Ton) of glass and to preferably produce molten glass at a temperature of about 1427°C. (2600°F.) for a conventional soda-lime glass for example. Glass melting reactions can occur at temperatures as low as about 1040°C (1900°F.) but the reaction times for such low temperatures are too long for practical glass melting operations in accordance with the present invention.

The exhaust stream 17 exits from the nozzle outlet 19 into a separation chamber 12. While the configuration of the separation chamber is not critical, it may be, for example, cylindrical as shown in Figure 1 or other conventional shape and formed in conventional manner for production of glass and operation at glass melting high temperatures. It is not intended, and the design of the separation chamber should be such that very little and preferably no glass batch material (except possibly for purposes of insulation) be deposited on the exposed inner wall surfaces 21 of the separation chamber 12. The outlet 19 of the nozzle 13 for an embodiment as shown by way of example in Figure 1 is centrally disposed in the top wall 22 of the separation chamber 12. The nozzle 13 and separation chamber 12 may each have a line of symmetry, each be symmetrical with its line of symmetry and these lines of symmetry should be at least substantially coincident one with another.

The separation chamber is provided with an upper separation portion 23 and a lower glass collection portion 24. Disposed within the separation chamber is a center body member 25 having an upper impact surface portion 26 disposed in the separation chamber upper portion 23 and a glass flow portion 27 extending from the impact surface portion to the lower molten glass collection portion 24 of the separation chamber. While the impact surface portion 26 may have a configuration other than generally hemispherical as shown in Figure 1, it should have and be at least substantially symmetrical with its line of symmetry at least approximately coincident with the line symmetry of the nozzle. Further, the impact surface should be of a size and configuration and spaced a distance from the nozzle outlet that substantially all of the entrained glass batch material in the exhaust stream 17 emanating from the nozzle outlet 19, and especially the smaller sized particles, will strike the impact surface.

The impact surface portion 26 as shown in Figure 1 is illustrated for purposes of example, essentially hemispherical in shape and spaced from the nozzle outlet 19 preferably not more than several times the diameter (if circular) or minimum dimension of the nozzle outlet (if noncircular). A suitable distance is about 2.5 times the diameter of a circular nozzle outlet. The impact surface portion 26 must be closely spaced to the nozzle outlet to provide effective separation of the glass batch material from the products of combustion. This is necessary because as this distance is increased greater and greater quantities of the smaller size particles will be carried past the impact surface portion by the gas flow. The glass flow portion 27 is provided with a smooth generally conical outer surface 28 extending from the impact surface portion 26 to and into the molten glass collection portion 24 to receive the melt flow or molten glass flow from the impact surface portion 26 and direct it into the molten glass pool 29 in the glass collection portion 24 of the collection chamber. As will become evident hereinafter, the nozzle and center body member need not be annular in shape as shown by way of example in Figure 1.

In practice it is advantageous to provide cullet, or the like, in the glass batch material. This is effective in improving the adherence of other glass batch material since some may not be softened or melted when it reaches the impact surface portion 26 whereas the cullet is more likely to be or become molten at or shortly after it impacts on the impact surface portion 26. This facilitates the continuous provision of a molten layer on the impact surface portion 26 which will capture most if not all of any unmelted particles.

Uniformly spaced flue gas ports 31 are provided in the side walls of the separation chamber for receiving the products of combustion or flue gas at a level preferably a short distance above the top of the molten glass pool 29 and directing them circumferentially uniformly into a plenum chamber 32 where they can be withdrawn through pipe 33 and thereafter directed to heat exchangers and the like and used in conventional manner. Molten glass is removed from the molten glass pool via pipe 34 and used in conventional manner.

In accordance with the method of the present invention wherein the exhaust stream having a first line of symmetry corresponding to that of nozzle 14 is caused to exit from the combustion chamber via a nozzle and impact on a closely spaced preferably hemispherical impact surface portion having a second line of symmetry substantially coincident with the first line of symmetry to a separation chamber, in addition to other numerous other advantages discussed earlier, provides, as compared to the prior art, more simply, efficiently, and economically, particle capture and improved distribution uniformity and homogenization of the glass batch material.

Separation of the glass batch material at the impact surface portion 26 utilizes the inertia of the glass batch material in the sharply turned gas flow field generated at the impact surface portion. In addition to the advantages noted immediately herein above, the present invention provides substantially improved separation because of the close proximity of the nozzle outlet 19 and the impact surface portion 26 which for any given velocity provides minimum turbulence, maximum turning of the gas flow at maximum velocity for minimum pressure drop, and maximum separation.

The impact surface portion 26 and flow surface portion 27 may be each formed of a first outer or exposed metal member (not shown) on which glass batch material is deposited and a second inner or rear metal member having disposed between them coolant passages (not shown) for receiving a coolant such as water adapted to maintain the outer metal member at less than its failure temperature. The cooling of the outer metal member is effective in preventing its failure and in causing molten glass batch material at the exposed surface of the inner metal member to solidify and therefore function to protect it from erosion by the high temperature glass batch material being continuously deposited.

The above-noted water-cooled portions provide surfaces to which the particles of glass batch material can adhere to form a continuous layer of glass which builds up to an equilibrium thickness based on the gas shear forces, melt viscosity and gravity. At equilibrium, the aforementioned glass layer comprises an inner layer of frozen or solidified glass with a steep temperature gradient and is covered with a preferably thin layer of molten glass at a temperature somewhat lower than the gas temperature.

Broadly, heretofore, the most successful method of causing a silicate slag material to adhere to a cooled metallic surface has been to provide in the cooled surface regularly spaced ceramic surfaces to which the slag will readily adhere. For this purpose, castable ceramic material may be trowled into machined grooves which may be typically 0.64 cm. (one-fourth inch) wide at a 1.27 cm. (one-half inch) pitch. From these initial attachment points, slag was found to gradually bridge over the exposed metal to form a continuous uniform layer. The walls to which the glass batch material adheres may be of similar prior art construction which will provide the same result. Another wall treatment which may be used is the provision of a continuous ceramic coating applied by a plasma gun.

The technology establishing a coating as a flow over a cooled metal wall as noted above was extensively developed during the past decade with specific orientation toward the use of silicate slags derived from coal combustion as erosion barriers and insulators. This technology development had its origin in open cycle NHD power generation hardware testing and was aimed at developing wall structures for MHD components that would be compatible with high temperature silicate slags from coal combustion products.

For more thorough discussion of this technology as well as the construction and fabrication of suitable impact surface and flow members, reference is made to "Replenishment Analysis and Technology Development," by D. B. Stickler and R. DeSaro, Sixth International Conference on MHD Electrical Power Generation, Washington, DC, June 1975; "Controlled Utilization of Coal Slag in the MHD Topping Cycle," by D. B. Stickler and R. DeSaro, presented at the Engineering Foundation Conference on Ash Deposits and Corrosion Due to Impurities in Combustion Gases, held at New England College, Henniker, NN, June 26 - July 1, 1977; "Slag-Coated Wall structure Technology for Entrained Flow Gasifiers," by D.B. Stickler and R.E. Gannon, presented at the 1981 International Gas Research Conference, September 28 - October 1, 1981, Los Angeles, CA which are hereby incorporated herein as if set out at length; "Unique Combustion System for Oil to Cool Conversions," by R.K. Mongeon and D.B. Stickler, presented to Joint Power Generation Converence, Toronto, Canada, September 30 - October 4, 1984 and Industrial Power Conference, Philadelphia, Pennsylvania, October 28-31, 1984; and "Toroidal Flow Pulverized Coal-Fired MHD Combustor", by J.O.A. Stankevisc, A.C.J. Mattson, and D.B. Stickler, presented at the Third Coal Technology Europe 1983 Conference, Amsterdam, The Netherlands, October 11-13, 1983.

Alternately, it is to be understood that the impact surface portion 26 and/or the flow surface portion 27 may be comprised of any suitable ceramic or other material that is non-reactive with glass.

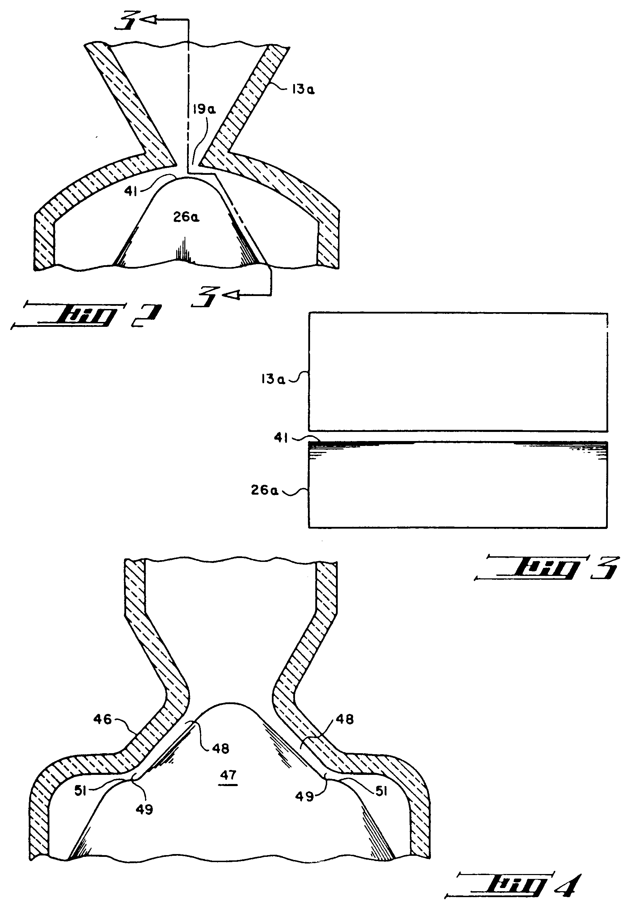

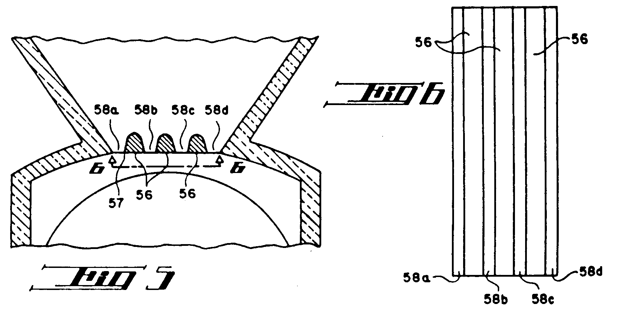

Attention is now directed to Figures 2 and 3 which show an alternate embodiment of the nozzle 13 and an impact surface portion 26a combination. In this case, the nozzle 13a and its outlet are rectangular in configuration and the impact surface portion 26a is substantially wedged shaped with a smoothly curved apex 41. The impact surface portion 26a as previously noted, is at least substantially symmetrical with its line of symmetry which is coincident with the nozzle line of symmetry.

Figure 4 shows a further embodiment of the nozzle and impact surface. In this case, the nozzle is provided with a divergent lower portion 46 and in cooperation with an upwardly projecting generally conical portion 47 of the impact surface forms a convergent annular nozzle 48 having an annular nozzle outlet 49. A short distance downstream from the nozzle outlet the upwardly projecting portion is provided with an outwardly extending curved annular surface or shoulder 51 which uniformly directs the exhaust stream circumferentially outwardly. It will occur to those skilled in the art that the above-noted arrangement for providing an annular outlet can also be provided with other configurations including a continuously convergent nozzle.

A still further embodiment of the nozzle impact surface combination is shown in Figures 5 and 6 where elongated wedge shaped members 56 disposed at the nozzle outlet 57 form a plurality of further nozzles 58 a, b, c, and d each having a generally rectangular cross section. Other configuration for nozzle impact surface combinations will occur to those skilled in the art.

The configuration of the center body member and separation chamber is preferably chosen to provide maximum uniform flow of separated combustion products adjacent the impact surface portion and melt flow on the flow surface portion. This is desirable to provide drive for the melt flow from the impact surface to the molten glass pool, and more importantly, to provide strong, internal shear motion in the melt flow. In operation, there may be as previously noted, solidified glass adhering to the flow surface and molten glass covering the solidified glass. This molten glass flow from the impact surface to the molten glass pool is driven by the products of combustion or flue gas flowing toward the flue gas ports and by gravity. If operating conditions are controlled to provide a thin layer of flowing melt flow, for example, of the order of about 1.6 mm (one-sixteenth inch) thick, preferably in combination with control of the separated products of combustion to produce strong internal shear motion in the melt flow, the distance or time required for a unit of molten glass to flow from the impact surface to the molten glass pool such, as for example about ten seconds or more can be easily provided whereby bubbles and/or undissolved gas in the melt flow will have more than sufficient time to immigrate or travel to the exposed surface of the melt flow and enter the flue gas flow. Similarly, unreacted particles and the like will also have more than sufficient time to complete their reaction and similarly disappear.

The provision of a temperature gradient through the melt flow, as by making the flow surface a cooled surface, as discussed hereinbefore, produces temperature gradient in the melt flow. The resulting temperature gradient through the flowing glassy material results in a gradient in surface tension around entrapped gas bubbles. This gradient in surface tension enhances the transport of bubbles to the interface with the flue gas flow and removal from the glass melt.

The provision of the above-noted control of operating parameters results in highly effective glass fining and obviates the use of conventional fining agents such as sulfates to enhance melt formation and/or fining. Further, since the above-described process does not require sulfur additives, there will be negligible SOₓ concentration in the flue gas exhausted from the separation chamber.

As noted above, there will be no SOₓ produced in the products of combustion or flue gas (except for very small quantities of sulfur components sometimes contained in natural gas fuel and as a trace component in cullet obtained from prior art glass) because the sodium necessary for glass making need only be supplied entirely as sodium carbonate. Therefore, in apparatus in accordance with the present invention, SOₓ will not represent an emission control problem.

The formation of more troublesome NOₓ may be controlled to levels near, if not substantially less than a desired efficient level of about of 2 Kg NOₓ/1000 Kg (4 lb NOₓ/ton) of glass (NOₓ emission of 3.5 Kg NOₓ/1000 Kg (7lb/ton) of glass or more is typical for prior art processes) by controlling the extent of initial formation of NOₓ in the high temperature combustion products which may be as high as about 2204°C. (4000°F.).

It is to be understood that the scope of the present invention includes, for example, albeit a less desirable embodiment, effectively turning the apparatus of Figure 1 inside out and placing the combustion chamber within the separation chamber whereby the exhaust stream from the nozzle is now directed upwardly and impacts on the top wall which may now be concave and which is formed and functions as heretofore described as the impact surface portion and the walls of the separation chamber now become the flow portion.

Further, a series of nozzle-center body combinations may be provided to increase output. It is to be further understood that the provision of a hot gas stream for melting glass batch material need not be limited to combustion sources and where desired may be supplied or supplemented by other radiant energy sources such as, for example, electric arcs plasma sources, nuclear energy and the like or any combination thereof.

The vertical downflow embodiment of the present invention is particularly advantageous in that it permits the simplest, most economical and dependable construction; operation, maintenance and repair of systems for producing a glass product.

## Claims

1. A method of producing molten glass by heat processing glass batch material, comprising:
(a) generating (11) a first hot gas stream having a peak temperature substantially greater than the melting temperature of the glass product;
(b) entraining glass batch material in said first hot gas stream;
(c) causing said first hot gas stream and entrained glass batch material to form a second stream (17) having a first line of symmetry; characterized by
(d) causing said second stream to be directed toward a first impact surface (26) having a second line of symmetry substantially coincident with said first line of symmetry at a velocity and in a manner to form a gas flow field at about said first surface (26) causing said entrained glass batch material to be separated from said second stream by contacting and being deposited on said first surface;
(e) causing said deposited material to flow from said first surface over a second surface (28) to a collection zone (24) as a viscous layer having an exposed surface; and
(f) controlling the flow of said viscous layer and said second stream (17) after leaving said first surface to cause gas entrapped or generated therein to immigrate to and leave the exposed surface of said viscous layer and simultaneously cause at least substantial reaction of glass batch materials comprising said viscous layer whereby mixing and glass forming reactions including the generation of gas in said viscous layer and elimination of gas therefrom substantially occur before reaching said collection zone.

2. A method according to claim 1, wherein the rate at which entrained glass batch material is deposited on said first surface (26) is controlled.

3. A method according to claim 2, wherein the spatial distribution of entrained glass batch material deposited on said first surface (26) is at least substantially controlled to provide a predetermined rate of substantially uniform deposit of entrained glass batch material on said first surface.

4. A method according to any one of claims 1-3, wherein the thickness of said viscous layer and the flow of said second stream thereover is controlled to provide a thickness, heat transfer and mixing, whereby the maximum time necessary for gases entrained in said viscous flow to reach the exposed surface thereof is substantially less than that required for a unit of viscous flow to reach said collection zone (24).

5. A method according to any one of claims 1-4, wherein the temperature distribution of said viscous layer is controlled whereby the maximum time necessary for gases entrained in said viscous flow to reach the exposed surface thereof is substantially less than that required for a unit of viscous flow to reach said collection zone (24).

6. A method according to any one of claims 1-5, wherein said second stream after leaving said first surface (26) is caused to flow at least substantially adjacent the exposed surface of said viscous layer and produce internal shear motion in said viscous layer as it flows over at least a portion of said second surface (28).

7. A method according to any one of claims 1-6, wherein said second stream after leaving said first surface (26) is caused to flow at least substantially adjacent the exposed surface of said viscous layer to transfer heat thereto.

8. A method according to any one of claims 1-7, wherein said second stream (17) is a single, at least substantially downwardly directed stream and is substantially symmetrical with its first line of symmetry, said first surface (26) is substantially symmetrical with its second line of symmetry, and said viscous layer flows at least substantially downwardly.

## Patentansprüche

1. Verfahren zum Erzeugen von schmelzflüssigem Glas durch Wärmebehandlung von Glasansatzmaterial, umfassend:
(a) Erzeugen (11) eines ersten Heißgasstroms mit einer wesentlich höheren Maximaltemperatur als die Schmelztemperatur des Glasprodukts;
(b) Mitreißen von Glasansatzmaterial in dem ersten Heißgasstrom;
(c) Bewirken, daß der erste Heißgasstrom und mitgerissenes Glasansatzmaterial einen zweiten Strom (17) mit einer ersten Symmetrielinie bilden, gekennzeichnet durch:
(d) Bewirken, daß der zweite Strom auf eine erste Prallfläche (26) gerichtet wird, die eine zweite Symmetrielinie aufweist, die im wesentlichen mit der ersten Symmetrielinie koinzidiert, und zwar bei einer Geschwindigkeit und in einer Weise, daß etwa an der ersten Fläche (26) ein Gasströmungsfeld gebildet wird und bewirkt wird, daß das mitgerissene Glasansatzmaterial von dem zweiten Strom durch Kontaktieren und Abscheiden auf der ersten Fläche separiert wird;
(e) Bewirken, daß das abgeschiedene Material von der ersten Fläche über eine zweite Fläche (27) zu einer Sammelzone (24) als eine viskose Schicht mit einer exponierten Oberfläche fließt; und
(f) Kontrollieren des Flusses der viskosen Schicht und des zweiten Stroms (17) nach Verlassen der ersten Fläche, um zu bewirken, daß das darin eingeschlossene oder erzeugte Gas zur exponierten Oberfläche der viskosen Schicht hinwandert und diese verläßt, und um gleichzeitig mindestens ein weitgehendes Umsetzen der diese viskose Schicht umfassenden Glasansatzmaterialien zu bewirken, wodurch Mischen und Glasbildungsreaktionen, einschließlich die Erzeugung von Gas in der viskosen Schicht und das Eliminieren von Gas daraus im wesentlichen vor dem Erreichen der Sammelzone erfolgen.

2. Verfahren nach Anspruch 1, bei welchem die Geschwindigkeit, mit der das mitgerissene Glasansatzmaterial auf der ersten Fläche (26) abgeschieden wird, kontrolliert wird.

3. Verfahren nach Anspruch 2, bei welchem die räumliche Verteilung des mitgerissenen und auf der ersten Fläche (26) abgeschiedenen Glasansatzmaterials mindestens weitgehend kontrolliert wird, um eine vorbestimmte Geschwindigkeit eines im wesentlichen gleichförmigen Abscheidens mit mitgerissenem Glasansatzmaterial auf der ersten Fläche zu gewähren.

4. Verfahren nach einem der Ansprüche 1 bis 3, bei welchem die Dicke der viskosen Schicht und der Fluß des zweiten Stroms darüber kontrolliert wird, um Dicke, Wärmeübergang und Mischen zu gewähren, wodurch die maximale Zeit, die für die in dem viskosen Fluß mitgerissenen Gase zum Erreichen seiner exponierten Oberfläche benötigt wird, wesentlich kürzer ist als diejenige, die eine Einheit des viskosen Flusses für das Erreichen der Sammelzone (24) benötigt.

5. Verfahren nach einem der Ansprüche 1 bis 4, bei welchem die Temperaturverteilung der viskosen Schicht kontrolliert wird, wodurch die maximale Zeit, die für die in dem viskosen Fluß mitgerissenen Gase zum Erreichen seiner exponierten Oberfläche benötigt wird, wesentlich kürzer ist als diejenige, die eine Einheit des viskosen Flusses für das Erreichen der Sammelzone (24) benötigt.

6. Verfahren nach einem der Ansprüche 1 bis 5, bei welchem der zweite Strom nach Verlassen der ersten Fläche (26) dazu gebracht wird, mindestens im wesentlichen angrenzend an der exponierten Fläche der viskosen Schicht zu fließen und eine innere Scherungsbewegung in der viskosen Schicht zu bewirken, wenn er über mindestens einen Abschnitt der zweiten Fläche (28) fließt.

7. Verfahren nach einem der Ansprüche 1 bis 6, bei welchem der zweite Strom nach verlassen der ersten Fläche (26) dazu gebracht wird, mindestens im wesentlichen angrenzend an der exponierten Fläche der viskosen Schicht zu fließen, um auf diese Wärme zu übertragen.

8. Verfahren nach einem der Ansprüche 1 bis 7, bei welchem der zweite Strom (17) ein einzelner, mindestens im wesentlichen abwärtsgerichteter Strom ist und im wesentlichen mit seiner ersten Symmetrielinie symmetrisch ist, wobei die erste Fläche (26) mit der zweiten Symmetrielinie im wesentlichen symmetrisch ist und die viskose Schicht mindestens im wesentlichen abwärts fließt.

## Revendications

1. Procédé de production de verre fondu par traitement par chauffage d'un matériau de lot de verre, consistant :
(a) à produire (11) un premier courant de gaz chaud présentant une température de pointe sensiblement supérieure à la température de fusion du produit en verre ;
(b) à entraîner un matériau de lot de verre dans ledit premier courant de gaz chaud ;
(c) à faire former audit premier courant de gaz chaud et de matériau de lot de verte entraîné un second courant (17) présentant une première ligne de symétrie ;
caractérisé en ce que
(d) on fait diriger ledit second courant vers une première surface de choc (26) présentant une seconde ligne de symétrie coïncidant sensiblement avec ladite première ligne de symétrie à une vitesse et de manière à former un domaine d'écoulement de gaz sur à peu près ladite première surface (26) provoquant la séparation dudit matériau de lot de verte entraîné dudit second courant en touchant et en étant déposé sur ladite première surface ;
(e) on fait s'écouler ledit matériau déposé de ladite première surface sur une seconde surface (28) vers une zone de recueil (24) en tant qu'une couche visqueuse présentant une surface exposée ; et
(f) on contrôle l'écoulement de ladite couche visqueuse et dudit second courant (17) après avoir quitté ladite première surface pour faire en sorte que du gaz piégé ou produit à l'intérieur de celle-ci immigre vers et quitte la surface exposée de ladite couche visqueuse et provoque simultanément au moins une réaction substantielle des matériaux de lot de verte comprenant ladite couche visqueuse, les réactions de mélange et de formation de verte comprenant la production de gaz dans ladite couche visqueuse et l'élimination du gaz de celle-ci ayant sensiblement lieu avant d'atteindre ladite zone de recueil.

2. Procédé selon la revendication 1, dans lequel la vitesse à laquelle le matériau de lot de verte entraîné est déposé sur ladite première surface (26) est contrôlée.

3. Procédé selon la revendication 2, dans lequel la distribution spatiale du matériau de lot de verte entraîné déposé sur ladite première surface (26) est au moins sensiblement contrôlée pour fournir une vitesse prédéterminée de dépôt sensiblement uniforme du matériau de lot de verte entraîné sur ladite première surface.

4. Procédé selon l'une quelconque des revendications 1 à 3, dans lequel l'épaisseur de ladite couche visqueuse et l'écoulement dudit second courant au-dessus de celle-ci sont contrôlés pour fournir une épaisseur, un transfert thermique et un mélange, le temps maximal nécessaire aux gaz entraînés dans ledit écoulement visqueux pour atteindre la surface exposée de celle-ci étant sensiblement inférieur à celui nécessaire à une unité d'écoulement visqueux pour atteindre ladite zone de recueil (24).

5. Procédé selon l'une quelconque des revendications 1 à 4, dans lequel la distribution de température de ladite couche visqueuse est contrôlée, le temps maximal nécessaire aux gaz entraînés dans ledit écoulement visqueux pour atteindre la surface exposée de celle-ci étant sensiblement inférieur à celui nécessaire à une unité d'écoulement visqueux pour atteindre ladite zone de recueil (24).

6. Procédé selon l'une quelconque des revendications 1 à 5, dans lequel on fait s'écouler ledit second courant après avoir quitté ladite première surface (26) de manière au moins sensiblement adjacente à la surface exposée de ladite couche visqueuse et on fait produire un mouvement de cisaillement interne dans ladite couche visqueuse alors qu'elle s'écoule sur au moins une partie de ladite seconde surface (28).

7. Procédé selon l'une quelconque des revendications 1 à 6, dans lequel on fait s'écouler ledit second courant après avoir quitté ladite première surface (26) de manière au moins sensiblement adjacente à la surface exposée de ladite couche visqueuse pour transférer de la chaleur à celui-ci.

8. Procédé selon l'une quelconque des revendications 1 à 7, dans lequel ledit second courant (17) est un courant unique, au moins sensiblement dirigé vers le bas et est sensiblement symétrique par rapport à sa première ligne de symétrie, ladite première surface (26) est sensiblement symétrique par rapport à sa seconde ligne de symétrie, et ladite couche visqueuse s'écoule au moins sensiblement vers le bas.
